# EUROPEAN PATENT SPECIFICATION

(11) **EP 2 542 432 B1**
(45) Date of publication and mention of the grant of the patent: **21.06.2017**
(21) Application number: 11751373.9
(22) Date of filing: 03.03.2011
(51) Int. Cl.: B60J 10/74, B60J 10/18, B60J 10/75, B60J 10/265, B29C 47/00, B29C 47/02, B29L 31/30

(54) **CO-EXTRUDED ROLL FORMED BRIGHT EXTRUSION WITH INTEGRAL END FORMS**
DURCH HELLE EXTRUSION GEFORMTE KOEXTRUDIERTE ROLLE MIT INTEGRIERTEN ENDFORMEN
EXTRUSION LUISANTE PROFILÉE CO-EXTRUDÉE AVEC FORMES D'EXTRÉMITÉ INTÉGRÉES

(30) Priority: 03.03.2010 US 310085 P
(43) Date of publication of application: 09.01.2013
(73) Proprietor: Cooper-Standard Automotive, Inc., Novi, MI 48375-5329 (US)
(72) Inventor: LAYCOE, Chris, Waterloo, Ontario N2T 2M2 (CA); VOROS, John, Georgetown, ON L7G 4S5 (CA); HUSSEY, Ron, Etocoke, ON M9B 6L9 (CA); WATTS, Clint, Orangeville, Ontario L9W 4X5 (CA)
(74) Representative: Johnstone, Douglas Ian
(86) International application number: PCT/US2011/027062
(87) International publication number: WO 2011/109641

(56) References cited:
- WO-A1-2008/157332
- WO-A1-2008/157332
- US-A- 4 174 986
- US-A- 4 421 802
- US-A- 4 617 209
- US-A- 5 085 902
- US-A- 5 085 902
- US-A- 5 226 998
- US-A- 5 226 998
- US-A- 5 240 751
- US-A- 5 353 549

## Description

### Background of the Disclosure

This application claims priority from U.S. provisional patent application Serial No. 61/310,085, filed March 3, 2010.

This application relates to a weatherstrip or weatherseal for an automotive vehicle and, more particularly, a weatherstrip that incorporates a bright strip or metal show surface and requires closed ends.

Oftentimes, weatherstrips are a multi-part assembly in which a rigid core is coextruded with an elastomer such as rubber, EPDM, or plastic. A separately formed bright strip is roll formed and mechanically assembled to the weatherstrip after the weatherstrip has been removed from the extrusion line. For example, the bright strip often has a generally C-shaped cross-section in which the bent or hooked longitudinal edges mechanically grip the previously cured weatherstrip. This bright strip is mechanically clinched to the weatherstrip so that two separate components (the weatherstrip and the bright strip) become a mechanically-joined assembly that includes the weatherstrip with the bright strip mechanically and subsequently joined to the weatherstrip.

Commonly owned, co-pending U.S. application Serial No. 12/600,424, filed June 13, 2008 (published as WO 2008/157332) discloses a weatherstrip according to the preamble of claim 1. WO 2008/157332 is directed to a weatherstrip used in an automotive vehicle that incorporates a bright strip or an integrated metal cosmetic strip. The bright strip is preferably a stainless steel or anodized metal (e.g., aluminum) that is integrally joined to an elastomer weatherstrip body. More particularly, the weatherstrip has a core that is received in the extrusion body and additionally a metal bright strip is integrated within the extrusion body, i.e., passes through the extrusion line, and the bright strip provides an aesthetically pleasing upper reveal or show surface.

A need exists, however, for eliminating the necessity to use separate end caps, two-piece assemblies (using rolled or extruded metal), or molded ends in a weatherstrip with an integrated bright strip.

### Summary of the Disclosure

The claimed invention relates to a weatherstrip comprising: a body having a core formed of a first material and at least partially encapsulated in an elastomer; a metal bright strip having an exposed metal show surface that is integrated with the body and includes the elastomer along an opposite, rear surface; characterized by: an end region of the metal bright strip being configured from the metal bright strip material into an integral, one-piece closed end of the weatherstrip that is substantially perpendicular to the metal show surface, and the rear surface opposite the show surface of the metal bright strip is devoid of the elastomer in the end region.

In selected end regions of the formed end, remaining portions of the weatherseal cross-section are removed.

In one embodiment, the bright strip is formed of a first metal, for example stainless steel.

In another embodiment, the core is made from a different, second metal such as aluminum.

The claimed invention also relates to a method of forming a weatherstrip having a bright strip show surface comprising: providing a core; providing a separate metal bright strip; introducing the core and metal bright strip into an extrusion die; extruding an elastomer body over the core and over at least a portion of the metal bright strip to secure the metal bright strip to the body; removing the core and elastomer body material from an outer surface of the metal bright strip to expose a metal show surface; characterized by: removing the extruded elastomer body from a rear surface of an end region of the metal bright strip to allow the metal bright strip to be formed into an end; and mechanically forming at the end region of the metal bright strip an integral closed end that is substantially perpendicular to the metal show surface.

The method includes removing extruded material from a rear surface of the bright strip to allow the metal bright strip to be formed into an end.

In one preferred arrangement, trimming and removing of the material from the extruded weatherstrip is accomplished with a water jet.

A primary benefit is the ability to replace a conventional two-piece design with a single piece extrusion with integrated, formed ends.

Yet other benefits include weight savings, fewer pieces, processing and cost savings associated with the vehicle.

Still another advantage resides in the elimination of at least one step in a conventional operation.

Still other features and benefits of the present disclosure will become apparent upon reading and understanding the following detailed description.

### Brief Description of the Drawings

Figure 1 is an elevational view of an automotive vehicle door illustrating various areas in which a weatherstrip with a bright strip may be used.
Figure 2 is a cross-sectional view taken generally along the lines 2-2 of Figure 1, for example forming an outer belt weatherstrip.
Figure 3 is a prior art showing of the extrusion portion of the weatherstrip on the right-hand part of the Figure and the cap or bright strip shown in the left part of the Figure.
Figure 4 shows the completed two-part assembly of the extrusion and bright strip or cap from Figure 3.
Figure 5 is a view similar to Figure 2 of an outer belt assembly with a removable cover member extruded in-line.
Figure 6 illustrates the single co-extruded outer belt as it leaves the extrusion.
Figure 7 is a view similar to Figure 6 where the core and elastomer body material have been removed from the outer surface of the bright strip.
Figure 8 shows a step of removing additional portions from the weatherstrip.
Figure 9 shows further removal of elastomer, particularly from a rear surface of the bright strip.
Figure 10 is a view of the bright strip before being formed into an integrated end.
Figure 11 is an enlarged view of one end form.
Figure 12 is a cross sectional view through a co-extruded section with integrated roll formed ends for an upper reveal portion of a glass run.

### Detailed Description of the Preferred Embodiments

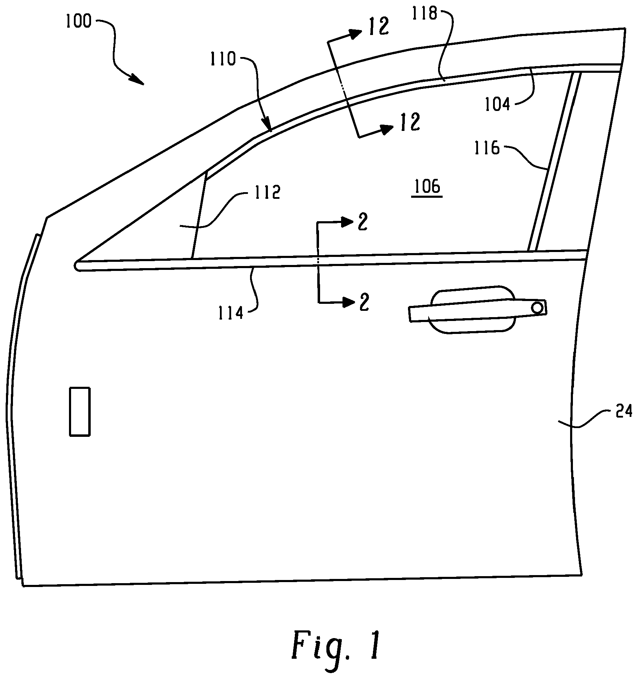

Figure 1 shows a portion of an automotive vehicle 100 having a body that includes a front door 102. The door has a window opening 104 that is selectively closed by a movable window 106. The window is selectively raised and lowered relative to the door opening by a regulator (not shown) in a manner well known in the art.

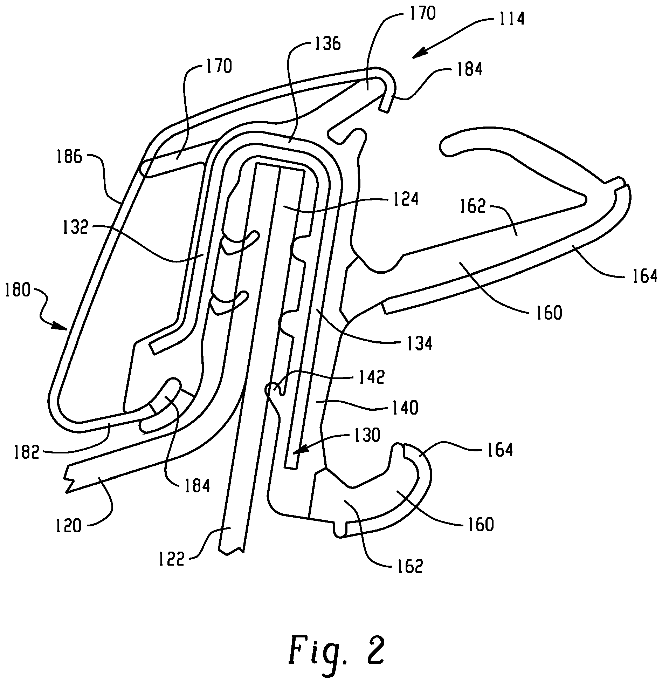

One or more weatherstrips or weatherseals 110 are provided on the body, door, and about the periphery of the door opening to seal the edge of the window and seal an interior compartment of the vehicle from the external elements. For example, the sealing system may include a mirror sail or other weatherstrip component 112 that seals along a front or A-pillar portion, a belt line seal 114, a B-pillar portion 116, and a header portion118. It is oftentimes desired that one or more of these weatherstrips include a bright strip having a show surface (i.e., that portion that is visible externally of the vehicle) along selected regions of the vehicle. Because of the long length associated with these weatherstrips, it is common to manufacture these components via an extrusion process. Thus, with continued reference to Figure 1, and additional reference to Figures 2-3, a conventional weatherstrip such as an outer belt 114 extends along a lower portion of the vehicle window opening from the A-pillar to the B-pillar. Inner and outer door panels 120, 122 are joined together adjacent the window opening and form a flange 124. The weatherstrip is secured over this flange 124. Particularly, the outer belt weatherstrip 114 includes a rigid core 130, shown here as an inverted, generally U-shaped member in cross-section, having first and second legs 132, 134 joined together adjacent one end by an interconnecting leg 136. The core may be formed of a wide variety of materials, but is oftentimes a rigid metal, and preferably aluminum because of its strength and light weight. Extruded about the core is a body, such as a rubber, plastic, or EPDM body (sometimes referred to as an elastomer or elastomeric body) 140. Oftentimes, the core is completely or substantially encapsulated by the body and includes one or more projecting retention fingers 142 that extend inwardly from the U-shaped body for gripping engagement with the door flange 124 so that when the U-shaped body is received over the flange, the outer belt is retained in place.

One or more seal members or seal lips 160 may be integrally formed in the extrusion or co-extrusion process. As shown in Figure 2, seal lips 160 extend from the body and particularly extend inwardly toward the interior of the vehicle where the lips are disposed for sealing engagement with the door window (not shown). The seal lips could be formed of the same material as the remainder of the elastomeric body or, as shown here, are co-extruded with the body but formed of a different material. For example, the seal lip may be formed of a softer, more flexible material 162 that is co- extruded with the remainder of body that surrounds the core and the co-extruded materials form an integral, one-piece structure. Those portions of the seal lip that are disposed for engagement with the window may include a hard, low friction surface such as a flock or low-friction coating 164. In addition, one or more retention fingers 170 are co-extruded as a portion of the elastomeric body and facilitate in retention of the bright strip 180, shown here as a mechanically engaged, generally C-shaped cap or bright strip that extends over the externally facing portion of the outer belt weatherstrip. Thus, one leg 182 of the generally C-shaped bright strip is mechanically received in a recess in the body while an opposite hooked end 184 is snap-fit over one of the retention fingers 170 extending outwardly from the elastomeric body. In this manner, a show region 186 faces outwardly from the vehicle door and provides a bright strip or desired cosmetic show surface facing outwardly from the vehicle.

The core is preferably roll-formed prior to introduction into an extruding die and as the core proceeds through a die cavity, the elastomeric body, seal lips, gripping fingers, and retention fingers are co-extruded around the core. The various portions of this body may be formed of different materials due to the intended function or aesthetic purpose that is desired of this particular portion of the body. The particular types of materials, whether it be a rubber, plastic, EDPM, etc., or the particular hardness or still other properties of the materials should not be construed as limiting the present disclosure.

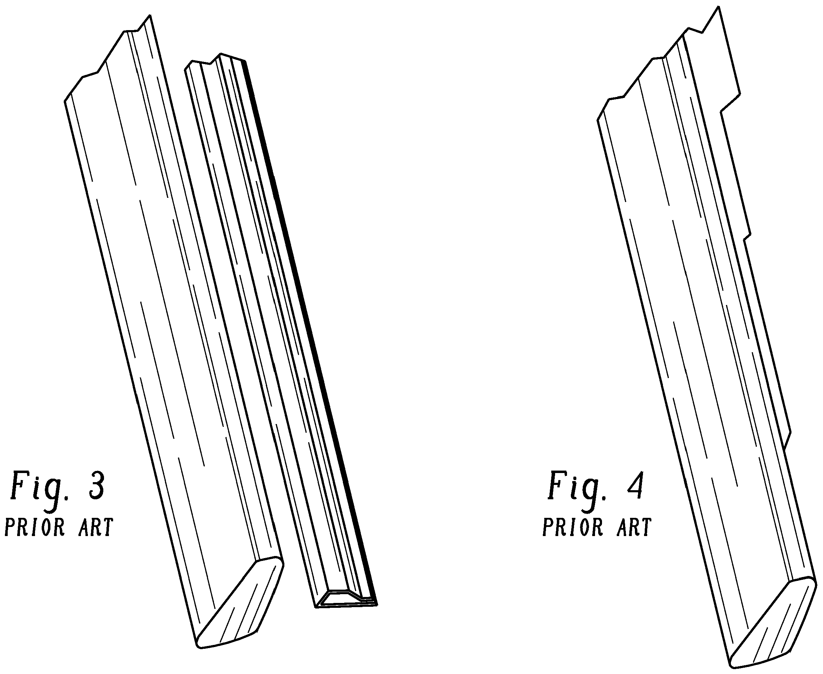

With continued reference to Figure 2, and more particular reference to Figures 3 and 4, the extrusion is shown in the right-hand portion of Figure 3 and the cap or bright strip 180 is shown as a separate roll-formed component that has an integral end form. That is, the end may be cut and/or combined with a series of mechanical deforming steps that are undertaken to achieve the desired end configuration of the bright strip, and particularly one with roll-formed ends to provide a closed, seamless end received over the end of the extruded component. Thus, once mechanically engaged to the extruded component, the finished weatherstrip is shown in Figure 4.

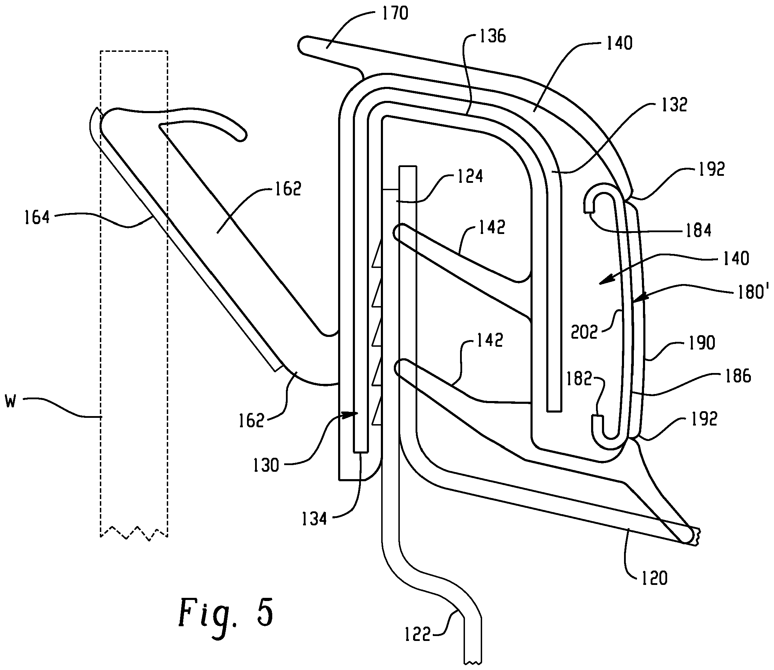

Figure 5 is a cross-sectional view of the present disclosure and shows an outer belt generally similar to Figure 2, but in which the bright strip 180' is integrally formed to be part of the one-piece structure by co-extruding it with the core and elastomeric body as shown and described in commonly owned International Application WO 2008/157332. Again, for purposes of consistency and brevity, like reference numerals refer to like components. As described in the co-pending application the bright strip is covered with a removable cover member 190 with regions 192 of reduced thickness that aid in removing the cover member and exposing the bright strip.

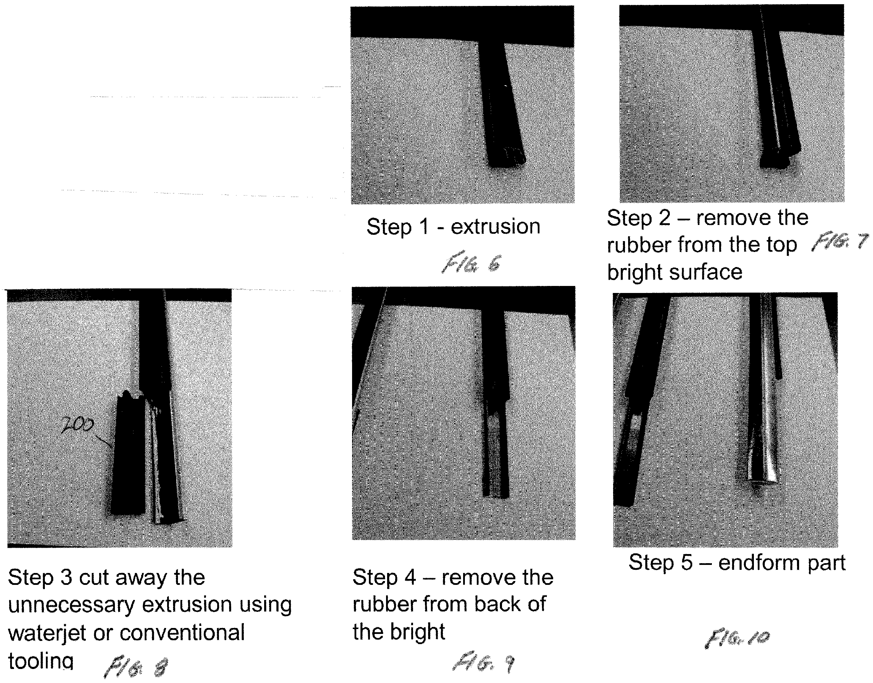

With continued reference to Figure 5, and additional reference to Figures 6-10, the steps of forming a single co-extruded weatherstrip such as an outer belt with integrated end forms will be described in greater detail. For example, Figure 6 illustrates the weatherstrip as the weatherstrip exits the extrusion line. Next, and as shown in Figure 7, the cover 190 is removed from the bright strip. Again, thinned regions 192 may be provided to facilitate removal of the cover from the remainder of the co-extruded material.

Conventional tooling, and preferably a water jet, is used to remove an end segment of the body core in that region where an end form of the bright strip is to be created. Thus, segment 200 of the body core is physically removed from the remainder of the weatherstrip as represented in Figure 8.

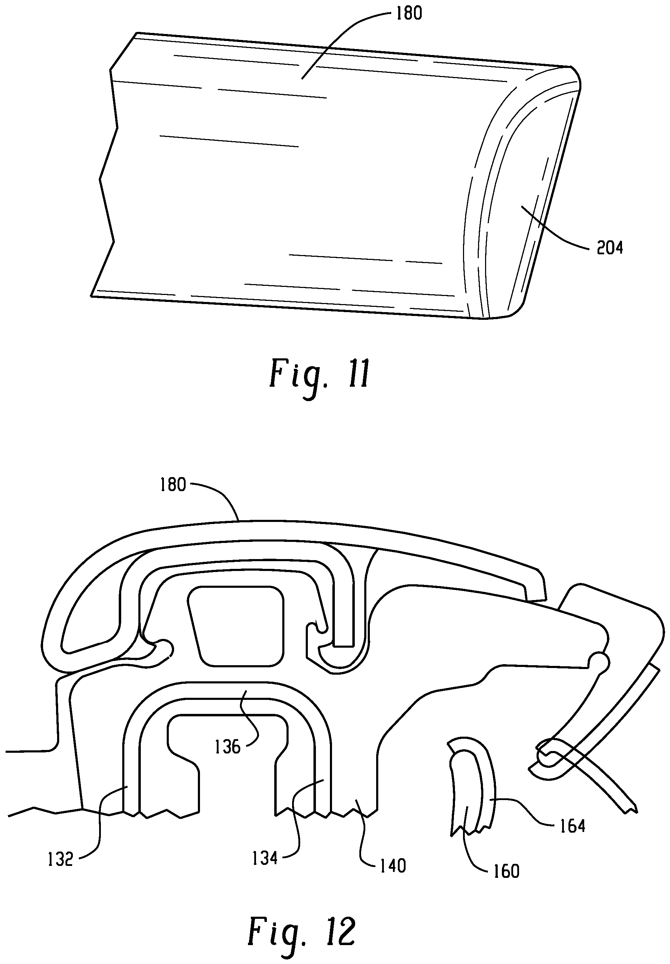

In Figure 9, the extruded material is next removed from an internal or back surface 202 of the bright strip (compare Figures 8 and 9) in the region where the body core was removed. Again, preferably a water jet or other conventional tooling can be used to complete this removal of the elastomer body from the rear surface of the bright strip. Next, the extending portion of the bright strip from which the extrudate material has been removed, as well as the core in this region, undergoes a series of deforming steps to create an integral end form that is closed at end 204 and is seamless relative to the remainder of the length of the bright strip. The extended length as shown here, for example, extends rearwardly from the mirror sail portion of the outer belt. It will be understood, however, by one skilled in the art that the length of the exposed bright strip shown in Figures 9 and 10 may vary depending on the configuration and location of the end form as provided on the vehicle. In any event, the final structure is a one-piece, integrated weatherstrip that is modified at one or both ends after exiting the extrusion die and that provides a bright strip with an integrated, one-piece end form. No separate visible end caps are required. In some instances, separate inserts may be required at one or both ends of the extrusion that have retention features for installation onto the door. These retention inserts would not be visible once installed onto the door. Thus, it will be understood that a roll-formed component can be a one piece design (or could also be a two piece or three piece design if the door retention inserts are required and which are not visible once the weatherstrip is installed), and the bright strip is fed through the extrusion die and not separately joined or mechanically gripped to a separately formed extrusion component. Figure 11 shows an enlarged portion of the end form 204 of the bright strip to demonstrate the seamless conformation of the bright strip along the end.

In Figure 12, the extruded profile of the weatherstrip along the header portion or upper reveal portion of the glass run is shown. Although the conformation of the weatherstrip, including the bright strip portion, is different, the same principles as described above are used. That is, an outer bright strip, for example formed of a bright metal such as aluminum or stainless steel, is integrated into the extruded weatherstrip and need not be separately mechanically formed and subsequently assembled to an extruded component and thereby present as a bright strip/show surface for the weatherstrip on the vehicle.

In summary, a conventional two-piece design using a rolled end form or a cap (bright strip) that is mechanically joined to a separate extrusion is replaced with a co-extruded weatherstrip having an integrated, formed bright strip with integral end forms. The integrated end forms replace a separate end cap or molded end, and closes an opened end of the weatherstrip.

The disclosure has been described with reference to the preferred embodiments. Modifications and alterations will occur to others upon reading and understanding this specification.

## Claims

1. A weatherstrip (114) comprising:
a body (130, 140) having a core (130) formed of a first material and at least partially encapsulated in an elastomer (140);
a metal bright strip (180) having an exposed metal show surface (186) that is integrated with the body (130, 140) and includes the elastomer (140) along an opposite, rear surface;
**characterized by**:
an end region of the metal bright strip (180) being configured from the metal bright strip (180) material into an integral, one-piece closed end (204) of the weatherstrip (114) that is substantially perpendicular to the metal show surface (186), and
the rear surface opposite the show surface of the metal bright strip (180) is devoid of the elastomer (140) in the end region.

2. The weatherstrip (114) of claim 1 wherein the integrated metal bright strip (180) is at least partially encapsulated in the elastomer (140).

3. The weatherstrip (114) of any preceding claim wherein the elastomer (140) is an extrudable material.

4. The weatherstrip (114) of any preceding claim wherein a cross-section through the body (130, 140), elastomer (140), and bright strip (180) has an extrudable profile.

5. The weatherstrip (114) of any preceding claim wherein the metal bright strip (180) is formed of a first metal.

6. The weatherstrip (114) of claim 5 wherein the first metal is stainless steel.

7. The weatherstrip (114) of claim 5 or 6 wherein the core (130) is made from a different, second metal.

8. The weatherstrip (114) of claim 7 wherein the second metal is aluminum.

9. The weatherstrip (114) of any preceding claim wherein the closed end (204) is a continuous uninterrupted surface that extends from the metal show surface (186).

10. The weatherstrip (114) of any preceding claim wherein the closed end (204) is a seamless extension of the metal bright strip (180).

11. A method of forming a weatherstrip (114) having a bright strip (180) show surface comprising:
providing a core (130);
providing a separate metal bright strip (180);
introducing the core (130) and metal bright strip (180) into an extrusion die;
extruding an elastomer body (140) over the core (130) and over at least a portion of the metal bright strip (180) to secure the metal bright strip (180) to the elastomer body (140);
removing the core (130) and elastomer body (140) material from an outer surface of the metal bright strip (180) to expose a metal show surface (186);
**characterized by**:
removing the extruded elastomer body (140) from a rear surface of an end region of the metal bright strip (180) to allow the metal bright strip (180) to be formed into an end (204); and
mechanically forming at the end region of the metal bright strip (180) an integral closed end (204) that is substantially perpendicular to the metal show surface (186).

12. The method of claim 11 wherein the removing step includes using a fluid jet.

13. The method of claim 11 or 12 wherein the mechanically forming step includes trimming bright strip (180) material from the extruded weatherstrip (114).

14. The method of claim 13 wherein the trimming step includes using a fluid jet.

15. The method of any one of claims 11 to 14 wherein the mechanically forming step includes roll forming the end region to create a seamless closed end (204).

## Patentansprüche

1. Witterungsstreifen (114), umfassend:
einen Körper (130, 140), der einen Kern (130) aufweist, der aus einem ersten Werkstoff ausgebildet ist und mindestens in ein Elastomer (140) eingekapselt ist;
einen Metallglanzstreifen (180), der eine freiliegende Metallschauseite (186) hat, die mit dem Körper (130, 140) integral verbunden ist, und das Elastomer (140) entlang einer entgegengesetzten, hinten liegenden Oberfläche aufweist;
**gekennzeichnet durch**:
einen Endbereich des Metallglanzstreifens (180), der aus dem Material des Metallglanzstreifens (180) in ein integrales, einstückiges geschlossenes Ende (204) des Witterungsstreifens (114) geformt ist, das im Wesentlichen senkrecht zur Metallschauoberfläche (186) ist, und
die hinten liegende Oberfläche, die der Schauoberfläche des Metallglanzstreifens (180) entgegengesetzt ist, in dem Endbereich ohne das Elastomer (140) ist.

2. Witterungsstreifen (114) gemäß Anspruch 1, wobei der integrierte Metallglanzstreifen (180) mindestens teilweise in das Elastomer (140) eingekapselt ist.

3. Witterungsstreifen (114) gemäß einem der vorhergehenden Ansprüche, wobei das Elastomer (140) ein extrudierbarer Werkstoff ist.

4. Witterungsstreifen (114) gemäß einem der vorhergehenden Ansprüche, wobei ein Querschnitt durch den Körper (130, 140), das Elastomer (140) und den Glanzstreifen (180) ein extrudiertes Profil hat.

5. Witterungsstreifen (114) gemäß einem der vorhergehenden Ansprüche, wobei der Metallglanzstreifen (180) aus einem ersten Metall ausgebildet ist.

6. Witterungsstreifen (114) gemäß Anspruch 5, wobei das erste Metall nichtrostender Stahl ist.

7. Witterungsstreifen (114) gemäß Anspruch 5 oder 6, wobei der Kern (130) aus einem anderen, zweiten Metall hergestellt ist.

8. Witterungsstreifen (114) gemäß Anspruch 7, wobei das zweite Metall Aluminium ist.

9. Witterungsstreifen (114) gemäß einem der vorhergehenden Ansprüche, wobei das geschlossene Ende (204) eine durchgehende ununterbrochene Oberfläche ist, die sich von der Metallschauoberfläche (186) aus erstreckt.

10. Witterungsstreifen (114) gemäß einem der vorhergehenden Ansprüche, wobei das geschlossene Ende (204) eine nahtlose Verlängerung des Metallglanzstreifens (180) ist.

11. Verfahren zum Ausbilden eines Witterungsstreifens (114), der eine Glanzstreifen-Schauoberfläche (180) hat, umfassend.
Vorsehen eines Kerns (130);
Vorsehen eines getrennten Metallglanzstreifens (180);
Einführen des Kerns (130) und des Metallglanzstreifens (180) in eine Extrusionsmatrize;
Extrudieren eines Elastomerkörpers (140) über dem Kern (130) und über mindestens einen Teil des Metallglanzstreifens (180) zum Befestigen des Metallglanzstreifens (180) an dem Elastomerkörper (140);
Entfernen des Kerns (130) und des Materials des Elastomerkörpers (140) von einer Außenoberfläche des Metallglanzstreifens (180) zum Freilegen der Metallschauoberfläche (186);
**gekennzeichnet durch**:
Entfernen des extrudierten Elastomerkörpers (140) von einer hinten liegenden Oberfläche eines Endbereichs des Metallglanzstreifens (180), um es dem Metallglanzstreifen (180) zu ermöglichen, in ein Ende (204) geformt zu werden; und
mechanisches Formen eines integralen geschlossenen Endes (204), das im Wesentlichen senkrecht zur Metallschauoberfläche (186) ist, an dem Endbereich des Metallglanzstreifens (180).

12. Verfahren gemäß Anspruch 11, wobei der Entfernungsschritt das Einsetzen eines Flüssigkeitsstrahls beinhaltet.

13. Verfahren gemäß Anspruch 11 oder 12, wobei der mechanische Formungsschritt einen Schritt des Abschneidens von Material des Glanzstreifens (180) von dem extrudierten Witterungsstreifen (114) beinhaltet.

14. Verfahren gemäß Anspruch 13, wobei der Abschneideschritt das Einsetzen eines Flüssigkeitsstrahls beinhaltet.

15. Verfahren gemäß einem der Ansprüche 11 bis 14, wobei der mechanische Formungsschritt ein Walzformen des Endbereichs zum Erzeugen eines nahtlosen geschlossenen Endes (204) beinhaltet.

## Revendications

1. Joint d'étanchéité (114) comprenant :
un corps (130, 140) ayant une âme (130) formée avec un premier matériau et au moins partiellement encapsulée dans un élastomère (140) ;
une bande luisante en métal (180) ayant une surface visible en métal (186) exposée qui est intégrée avec le corps (130, 140) et comprend l'élastomère (140) le long d'une surface arrière opposée ;
**caractérisé par** :
une région d'extrémité de la bande luisante en métal (180) étant configurée à partir du matériau de la bande luisante en métal (180) en une extrémité fermée (204) d'un seul tenant intégrale du joint d'étanchéité (114) qui est sensiblement perpendiculaire à la surface visible en métal (186), et
la surface arrière opposée à la surface visible de la bande luisante en métal (180) est dépourvue d'élastomère (140) dans la région d'extrémité.

2. Joint d'étanchéité (114) selon la revendication 1, dans lequel la bande luisante en métal (180) intégrée est au moins partiellement encapsulée dans l'élastomère (140).

3. Joint d'étanchéité (114) selon l'une quelconque des revendications précédentes, dans lequel l'élastomère (140) est un matériau pouvant être extrudé.

4. Joint d'étanchéité (114) selon l'une quelconque des revendications précédentes, dans lequel une section transversale à travers le corps (130, 140), l'élastomère (140), et la bande luisante (180) a un profil pouvant être extrudé.

5. Joint d'étanchéité (114) selon l'une quelconque des revendications précédentes, dans lequel la bande luisante en métal (180) est formée avec un premier métal.

6. Joint d'étanchéité (114) selon la revendication 5, dans lequel le premier métal est un acier inoxydable.

7. Joint d'étanchéité (114) selon la revendication 5 ou 6, dans lequel l'âme (130) est réalisée à partir d'un second métal différent.

8. Joint d'étanchéité (114) selon la revendication 7, dans lequel le second métal est de l'aluminium.

9. Joint d'étanchéité (114) selon l'une quelconque des revendications précédentes, dans lequel l'extrémité fermée (204) est une surface ininterrompue continue qui s'étend à partir de la surface visible en métal (186).

10. Joint d'étanchéité (114) selon l'une quelconque des revendications précédentes, dans lequel l'extrémité fermée (204) est une extension sans soudure de la bande luisante en métal (180).

11. Procédé pour former un joint d'étanchéité (114) ayant une surface visible de bande luisante (180) comprenant les étapes suivantes :
prévoir une âme (130) ;
prévoir une bande luisante en métal (180) séparée ;
introduire l'âme (130) et la bande luisante en métal (180) dans un moule à extrusion ;
extruder un corps élastomère (140) sur l'âme (130) et sur au moins une partie de la bande luisante en métal (180) pour fixer la bande luisante en métal (180) sur le corps élastomère (140) ;
retirer l'âme (130) et le matériau du corps élastomère (140) d'une surface externe de la bande luisante en métal (180) pour exposer une surface visible en métal (186) ;
**caractérisé par** :
le retrait du corps élastomère (140) extrudé d'une surface arrière d'une région d'extrémité de la bande luisante en métal (180) pour permettre à la bande luisante en métal (180) d'être formée dans une extrémité (204) ; et
le formage, mécaniquement, au niveau de la région d'extrémité de la bande luisante en métal (180), d'une extrémité fermée (204) intégrale qui est sensiblement perpendiculaire à la surface visible en métal (186).

12. Procédé selon la revendication 11, dans lequel l'étape de retrait comprend l'utilisation d'un jet de fluide.

13. Procédé selon la revendication 11 ou 12, dans lequel l'étape de formage mécanique comprend l'ajustage du matériau de bande luisante (180) du joint d'étanchéité (114) extrudé.

14. Procédé selon la revendication 13, dans lequel l'étape d'ajustage comprend l'utilisation d'un jet de fluide.

15. Procédé selon l'une quelconque des revendications 11 à 14, dans lequel l'étape de formage mécanique comprend le formage par laminage de la région d'extrémité afin de créer une extrémité fermée (204) sans soudure.
